(19) Europäisches Patentamt
European Patent Office
Office européen des brevets

(11) **EP 4 202 824 A1**

(12) **EUROPEAN PATENT APPLICATION**

(43) Date of publication:
**28.06.2023 Bulletin 2023/26**

(21) Application number: **21216190.5**

(22) Date of filing: **21.12.2021**

(51) International Patent Classification (IPC):
***G06T 5/00*** (2006.01)   ***G06T 11/00*** (2006.01)

(52) Cooperative Patent Classification (CPC):
**G06T 11/008; G06T 5/002;** G06T 2207/10081;
G06T 2207/20192; G06T 2211/408

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Koninklijke Philips N.V.
5656 AG Eindhoven (NL)**

(72) Inventors:
• **GRINGAUZ, Asher**
  **Eindhoven (NL)**
• **GOSHEN, Liran**
  **Eindhoven (NL)**

(74) Representative: **Philips Intellectual Property &
Standards
High Tech Campus 52
5656 AG Eindhoven (NL)**

(54) **METHOD FOR IMAGE-PROCESSING OF CT IMAGES**

(57)    The invention provides a computer-implemented method for image-processing of CT images, the method comprising performing one or more pre-processing steps on a CT image so as to obtain a pre-processed CT image, wherein the one or more pre-processing steps comprise applying an edge-preserving denoising algorithm; and performing an adaptive spike suppression algorithm on the pre-processed CT image to obtain a processed CT image, the adaptive spike suppression algorithm being configured such that the processed CT image has a reduced number of spikes as compared to the pre-processed CT image.

**S1**

performing one or more pre-processing steps (S1) on a CT image so as to obtain a pre-processed CT image, wherein the one or more pre-processing steps comprise applying an edge-preserving denoising algorithm

**S2**

performing an adaptive spike suppression algorithm (S2) on the pre-processed CT image to obtain a processed CT image

Fig. 1

EP 4 202 824 A1

**Description**

FIELD OF THE INVENTION

The invention provides a computer-implemented method for image-processing of CT images, a method comprising the method for image processing, a data processing system, a system comprising the data processing system, a computer program product, and a computer readable medium.

BACKGROUND OF THE INVENTION

While edge-preserving denoising allows for providing classic image texture and appearance by removing noise while preserving the underlying image details, it may lead to increased number of spikes, particularly when the noise distribution has a heavy tail. Heavy-tailed noise occurs in many situations, among others, in CT Photon Counting (PhC) systems and low does CT scans.

More specifically, Photon Counting CT systems leverage direct conversion detector technology to acquire data at multiple energy levels. Therefore, such systems have the potential to provide more details and allow a more detailed quantification of the different x-ray interactions including photoelectric effect, Compton scattering and k-edge energy component.

Such system may also have improved signal to noise ratio (SNR) with respect to integrating detectors.

The noise on CT images is inversely proportional to the square root of the mean photon number. When the signal amplitude from electronic noise is of a magnitude comparable to that from the detected photons, the contributions to the signal from electronic noise become significant.

One of the advantages of the Photon Counting detector is that it significantly reduces electronic noise. This allows the dose to be reduced.

The improved SNR also allows for improved tissue differentiation and/or material labelling, and improved quantitative imaging with CT systems, and enables novel imaging techniques, e.g., k-edge imaging and reduction of beam hardening artifacts.

However, as briefly mentioned above, a challenge posed by PhC is the heavy-tailed noise characteristic.

For context, the concept of heavy- tailed noise is briefly outlined below. Noise may often only have an approximately Gaussian distribution. Specifically, even when the center of the distribution is approximately Gaussian, the tails may not be. The tails of a distribution are the areas of the density corresponding to large distribution arguments. Heavy tails mean that for large values of the density argument, the density approaches zero more slowly than the Gaussian.

Heavy-tailed noise characteristics lead to increased spike occurrence after denoising, particularly at low doses.

Addressing this issue by removing spikes often does not yield satisfactory results, as there are too many false-positive spike identifications, leading to actual texture and/or contrast getting lost, and accordingly, to artificially smooth surfaces that lack detail.

SUMMARY OF THE INVENTION

Therefore, it is an object of the invention to alleviate some of the problems outlined above, in particular to allow for improved image quality even in the context of challenging CT imaging scenarios, like PhC systems and low doses.

The invention provides a computer-implemented method for image-processing of CT images, a method comprising the method for image-processing, a data processing system for performing for image-processing of CT images, a system comprising the data processing system, a computer program product, and a computer readable medium according to the independent claims. Preferred embodiments are laid down in the dependent claims.

The invention provides a computer-implemented method for image-processing of CT images. The method comprises performing one or more pre-processing steps on a CT image so as to obtain a pre-processed CT image, wherein the one or more pre-processing steps comprise applying an edge-preserving denoising algorithm. The method further comprises performing an adaptive spike suppression algorithm on the pre-processed CT image to obtain a processed CT image. The adaptive spike suppression algorithm may, in particular, be an algorithm configured such that the processed CT image has a reduced number of spikes as compared to the pre-processed CT image.

The claimed method, due to performing spike suppression in an adaptive manner and on previously denoised image data with denoising that is edge preserving, allows for solving at least one of the above problems.

The claimed method allows for significant noise reduction, for example even up to equivalent 90% dose reduction, while effectively suppressing spike noise and maintaining texture. The latter may provide classic CT image texture and appearance, e.g., avoid images having a plastic or artificial appearance. As such, the method renders results that are compatible with present procedures that rely on the classic CT image texture.

Denoising the data in the pre-processing step increases the signal to noise ratio of the spikes, which makes it is easier to identify and remove spikes.

The present disclosure provides an adaptive denoising algorithm. In other words, the algorithm performs adaptive spike noise suppression (aSNS).

The method according to the present disclosure allows and is suitable for denoising in PhC systems and low dose CT scans, particularly for providing significant noise reduction and suppression of spike noise, while maintaining image texture.

An adaptive algorithm means that a model used for the processing of the images may be adapted for each processed image depending on a determination as to whether the model meets certain criteria.

Any edge-preserving denoising algorithm known in the art may be applied in the pre-processing steps, for example, Philips iDose algorithm. Applying the denoising algorithm may comprise using a bilateral filter to fit data to linear or quadratic models. This allows for reliable removal of spikes and noise while preserving edges and texture.

As specified above, the term "spike suppression" refers to a reduced number of spikes in the processed image as compared to the pre-processed image. Pre-processing of images increases the signal to noise ratio (SNR) of spikes of the input CT image. The spike-reduction particularly aids in removing these spikes. The processed image may have, but does not necessarily have, a reduced number of spikes as compared to the image prior to pre-processing.

The CT images in the present disclosure may be photon counting CT images, particularly multiple-energy-level CT images.

The adaptive spike suppression algorithm may comprise fitting a model, in particular a linear model, for a three-dimensional neighborhood of a voxel of the pre-processed image.

This allows for reliable spike removal while preserving sharp edges.

Performing the adaptive spike suppression algorithm may comprise qualifying the model, for example the linear model. Qualifying the model may comprise checking whether the model meets one or more predetermined criteria. Performing the adaptive spike suppression algorithm may further comprise, in response to determining that the model does not meet the one or more predetermined criteria, adapting one or more model parameters of the model to obtain a modified model.

The above allows for applying the method under a wide range of different conditions, e.g., a wide range of input images, while still ensuring quality of results. Where the initial model is not suitable for a given condition, the features of the present disclosure allow for adjusting the model.

The criteria may comprise, for example that a voxel weight does not exceed a predetermined threshold and/or does not exceed weights of closest neighbor voxels by more than a predetermined amount and/or that the average weight of central voxels does not exceed a predetermined threshold.

Performing the spike suppression algorithm may comprise repeating the steps of qualifying the modified model and adapting one or model parameters until the modified model meets the predetermined criteria.

In other words, the model can be iteratively improved until it yields acceptable results. Such an iterative procedure allows for avoiding overcompensation when adapting the model, which would potentially lead to a model meeting the predetermined criteria, yet may at the same time result in loss of texture and/or contrast.

Performing the spike suppression algorithm may further comprise, in particular in response to determining that the model or the modified model meets the predetermined criteria, applying the model or the modified model for the voxel. That is, in response to determining that the model meets the predetermined criteria, the model may be applied for the voxel and/or, in response to determining that the modified model meets the predetermined criteria, the modified model may be applied for the voxel.

In other words, the voxel value will be corrected if necessary, i.e., if the voxel, based on the model, is determined to be part of a spike. This step may be performed for a plurality, in particular all, of the voxels in a sub-region of the image or the entire image. Thus the image will have a reduced number of spikes.

In the present disclosure, fitting the model may comprise, for each voxel, determining, for each of a plurality of closest-neighbor voxels, a weight factor, in particular, the weight factor incorporating at least one of a weight based on spatial distance between the voxel and the closest-neighbor voxel and a weight based on value-distance between the voxel and the closest-neighbor voxel. This allows for reliable identification and removal of spikes.

As mentioned above, in the present disclosure, performing the adaptive spike suppression algorithm may comprise qualifying the model and qualifying the model may comprise checking whether the model meets one or more predetermined criteria. Checking whether the model meets one or more predetermined criteria may comprise checking whether a/the weight factor of one or more voxels is within a predetermined range, in particular, remains below a predetermined threshold. Alternatively or in addition, checking whether the model meets one or more predetermined criteria may comprise checking whether a/the weight of one or more voxels exceeds the weight of the closest neighbor voxels by more than a predetermined amount and/or whether a/the average weight of several central voxels is within a predetermined range, in particular, remains below a predetermined threshold.

The above allows for reliably determining whether the model needs further adapting.

In the present disclosure, applying the model may comprise, for each voxel, performing weighted averaging using a/the weight factor or weight factors determined for each of a plurality of closest-neighbor voxels. This allows for reliable removal of spikes.

In the present disclosure, fitting the model for a three-dimensional neighborhood of a voxel of the pre-processed image may be performed using a filter and adapting one or more model parameters may comprise adapting filter parameters. This allows for reliable removal of spikes and noise while preserving edges and texture.

Adapting one or more model parameters may comprise adapting a parameter that determines aggressiveness of the weights, in particular adapting the parameter that determines aggressiveness of the weights so as to increase the aggressiveness of the weights.

The aggressiveness of the weights determines how sensitive the model is when it comes to identification of a spike. That is, with higher aggressiveness, more voxels will be identified as spikes and the overall image will be smoother after spike removal. Adjusting the aggressiveness allows for modifying the model so as to maintain texture while removing spikes reliably.

Alternatively or in addition, adapting one or more model parameters may comprise adapting a parameter that controls spatial weights, in particular adapting the parameter that controls spatial weights so as to increase the spatial weights.

Alternatively or in addition, adapting one or more model parameters may comprise adapting a parameter that determines the number of closest-neighbor voxels, in particular adapt the parameter that determines the number of closest-neighbor voxels so as to increase the number of closest-neighbor voxels.

Optionally, adapting one or more model parameters may comprise iteratively increasing the aggressiveness of the weights and/or iteratively increasing the spatial weights and/or iteratively increasing the number of closest-neighbor voxels. This allows for efficiently approaching model parameters that allow for reliably removing spikes and maintaining texture.

In the present disclosure, a/the weight based on spatial distance between the voxel $V_{i,j,k}$ and the closest-neighbor voxel may, for example, be determined as follows:

$$w^{spatial}_{i',j',k'} = \sqrt{\exp\left(-\frac{\left((i'dx)^2 + (j'dx)^2 + (k'dz)^2\right)}{2\sigma^2_{spatial}}\right)} \,,$$

wherein $dx$ is the size of the voxel in the axial plane, $dz$ is the size of the voxel in Z direction, and $\sigma_{spatial}$ is an algorithm parameter that controls the aggressiveness of the weights. In order to adapt the model, for example, $\sigma_{spatial}$ may be adapted such that, for example increased iteratively until, predetermined criteria are met. These criteria may be the criteria described throughout the present disclosure.

Alternatively or in addition, in the present disclosure, a/the weight based on value-distance between the voxel $V_{i,j,k}$ and the closest-neighbor voxel may be determined as follows:

$$w^{HU}_{i',j',k'} = \sqrt{\exp\left(-\frac{\left(V_{i,j,k} - V_{i+i',j+j',k+k'}\right)^2}{2(\hat{n}_{i,j,k}mult)^2}\right)} \,,$$

wherein $\hat{n}_{i,j,k}$ is the local noise level estimate of voxel $V_{i,j,k}$ and *mult* is an algorithm parameter that controls the aggressiveness of the weights. In order to adapt the model, for example, *mult* may be adapted such that, for example increased iteratively until, predetermined criteria are met. These criteria may be the criteria described throughout the present disclosure.

In the present disclosure, applying the model may comprise applying weighted averaging as follows:

$$\hat{V}1_{i,j,k} = \frac{\sum_{i'=-n}^{n}\sum_{j'=-n}^{n}\sum_{k'=-n}^{n}V_{i+i',j+j',k+k'}w^2_{i',j',k'}}{\sum_{i'=-n}^{n}\sum_{j'=-n}^{n}\sum_{k'=-n}^{n}w^2_{i',j',k'}} \,,$$

wherein $\hat{V}1_{i,j,k}$ represents the (new) noiseless estimate for voxel $V_{i,j,k}$ and $W_{i',j',k'}$ is a/the weight factor of the closest-neighbor voxels of voxel $V_{i,j,k}$, in particular, wherein $w_{i',j',k'} = w^{spatial}_{i',j',k'} w^{HU}_{i',j',k'}$. In particular, $w^{spatial}_{i',j',k'}$ may be a/the weight based on spatial distance between the voxel $V_{i,j,k}$ and the closest-neighbor voxel and $w^{HU}_{i',j',k'}$ may be a/the weight based on value-distance between the voxel $V_{i,j,k}$ and the closest-neighbor voxel. The weight $w^{spatial}_{i',j',k'}$ and/or the weight $w^{HU}_{i',j',k'}$ may be determined as described above, for example.

The present disclosure also provides a method comprising the method for image-processing according to the present disclosure.

The method may further comprise capturing the CT image by means of a photon counting CT imaging system, in particular by means of a low-dose CT scan. The CT imaging system may be a CT imaging system that detects radiation at multiple different energy levels.

Alternatively or in addition, the method may further comprise storing the processed CT image on a storage device and/or outputting the processed CT image, in particular on a display device. As such, the processed CT image can be used by computing components and/or by a user. For example, a computing component may access the processed CT image on the storage device for use in image-guided navigation and/or for computerized image recognition methods. Alternatively or in addition, a user may view the processed CT image on the display device for use in image-guided navigation and/or visual analysis.

Alternatively or in addition, the method may comprise using the processed CT image for image-guided navigation and/or for computerized image recognition methods.

A processed CT image according to the present disclosure will yield better results in all of these use cases, as spikes have been reliably removed and texture maintained.

The present disclosure also provides a data processing system configured to perform one or more pre-processing steps on a CT image so as to obtain a pre-processed CT image, wherein the one or more pre-processing steps comprise applying an edge-preserving denoising algorithm. The data processing system is further configured to perform an adaptive spike suppression algorithm on the pre-processed CT image to obtain a processed CT image. The adaptive spike suppression algorithm may, in particular, be configured such that the processed CT image has a reduced number of spikes as compared to the pre-processed CT image. In particular, the data processing system may be configured to carry out any of the method steps for image-processing of CT images of the present disclosure. In the context of the method steps, reference is made to the above disclosure and the method claims.

The present disclosure also provides a system comprising the data processing system of the present disclosure. The system may further comprise a CT imaging system configured to capture a/the CT image or images, in particular, wherein the CT imaging system is a photon counting CT imaging system. As mentioned above, the spike removal is particularly advantageous for photon counting CT images, which may otherwise yield poor image quality.

Alternatively or in addition, the system may comprise a display device configured to output the processed CT image. As mentioned above, this allows for a user to view the processed CT image on the display device, e.g., for use in image-guided navigation and/or visual analysis.

The present disclosure also provides a computer program product comprising instructions which, when the program is executed by a computer, cause the computer to carry out the steps of performing one or more pre-processing steps on a CT image so as to obtain a pre-processed CT image, wherein the one or more pre-processing steps comprise applying an edge-preserving denoising algorithm, and performing an adaptive spike suppression algorithm on the pre-processed CT image to obtain a processed CT image. The adaptive spike suppression algorithm may, in particular, be configured such that the processed CT image has a reduced number of spikes as compared to the pre-processed CT image.

In particular, the instructions, when the program is executed by the computer, may cause the computer to carry out any of the methods for image-processing of CT images of the present disclosure.

The present disclosure also provides a computer readable medium comprising instructions which, when executed by a computer, cause the computer to carry out the steps of performing one or more pre-processing steps on a CT image so as to obtain a pre-processed CT image, wherein the one or more pre-processing steps comprise applying an edge-preserving denoising algorithm, and performing an adaptive spike suppression algorithm on the pre-processed CT image to obtain a processed CT image. The adaptive spike suppression algorithm may, in particular, be configured such that the processed CT image has a reduced number of spikes as compared to the pre-processed CT image.

In particular, the instructions, when executed by the computer, may cause the computer to carry out any of the methods for image-processing of CT images of the present disclosure.

The features and advantages outlined in the context of the method for image processing similarly apply to the method comprising the method for image processing, the data processing system, the system comprising the data processing system, the computer program product, and the computer readable medium of the present disclosure.

Further features, examples, and advantages will become apparent from the detailed description making reference to the accompanying drawings.

BRIEF DESCRIPTION OF THE DRAWINGS

Fig. 1 shows a flow diagram of method for image-processing of CT images according to the present disclosure;
Fig. 2 shows a schematic and not to scale illustration of a system according to the present disclosure;
Fig. 3 shows a flowchart of an example for adaptive spike suppression according to the present disclosure;
Fig. 4 shows a flowchart of an example for edge-preserving denoising according to the present disclosure;
Figs. 5a and 5b show first exemplary CT images before pre-processing, after pre-processing, and after adaptive spike suppression at different magnifications;
Figs. 6a and 6b show second exemplary CT images before pre-processing, after pre-processing, and after adaptive spike suppression at different magnifications; and
Figs. 7a and 7b show third exemplary CT images before pre-processing, after pre-processing, and after adaptive spike suppression at different magnifications.

DETAILED DESCRIPTION OF EMBODIMENTS

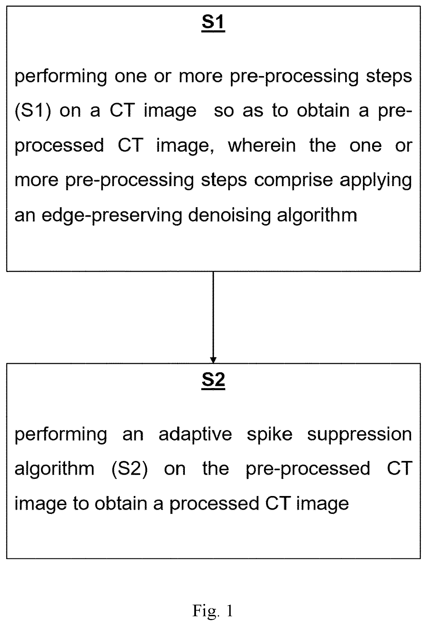

Fig.1 shows a flow diagram of an exemplary method for image-processing of CT images according to the present disclosure.

The method comprises the step S1 of performing one or more pre-processing steps to obtain a pre-processed image, more specifically, applying an edge-preserving denoising algorithm, for example Philips iDose algorithm. This algorithm, in order to remove noise, employs a model fitter that fits local structures to linear (constant) or nonlinear models. It allows for removing noise while preserving the underlying image details.

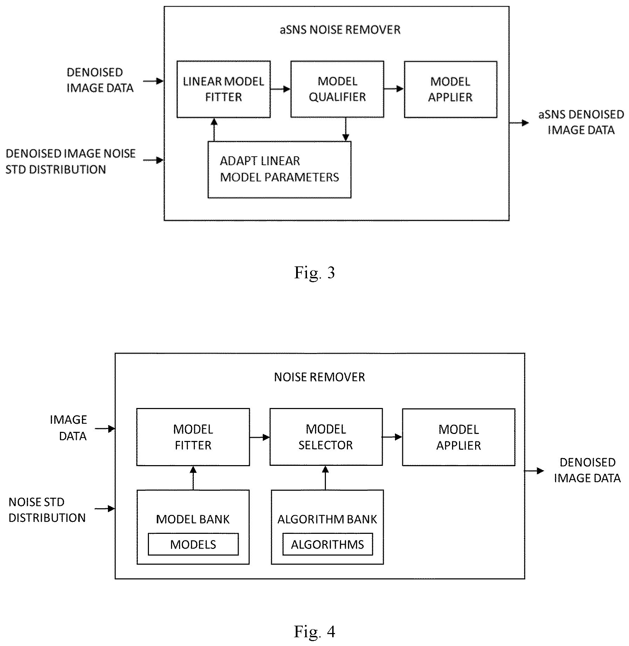

An example for such an edge-preserving denoising is provided below in the context of Fig. 4. However, other edge-preserving denoising algorithms are also conceivable for step S1.

The method further comprises the step S2 of performing an adaptive spike suppression algorithm on the pre-processed CT image to obtain a processed image. The adaptive spike suppression algorithm may be configured such that the processed CT image has a reduced number of spikes as compared to the pre-processed CT image.

An example of an adaptive spike suppression is provided below in the context of Fig. 3.

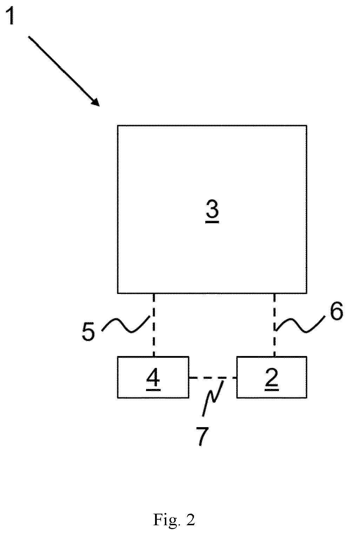

Fig. 2 shows a schematic and not to scale illustration of a system 1 according to the present disclosure. In this example, the system 1 comprises a data processing system 2. The data processing system is configured to perform one or more pre-processing steps on a CT image so as to obtain a pre-processed CT image, wherein the one or more pre-processing steps comprise applying an edge-preserving denoising algorithm, and to perform an adaptive spike suppression algorithm on the pre-processed CT image to obtain a processed CT image. The adaptive spike suppression algorithm may be configured such that the processed CT image has a reduced number of spikes as compared to the pre-processed CT image.

The data processing system may, in particular, be configured to carry out any of the image processing methods of the present disclosure. The data processing system may be a computing device or it may be a distributed system of interconnected computing devices, optionally including cloud devices.

The system 1 shown in Fig. 2 comprises an optional CT imaging system 3 configured to obtain CT images. For example, the CT imaging system may be a photon counting CT imaging system. The CT imaging system may be connected with the data processing system via a first data connection 6.

The system 1 shown in Fig. 2 also comprises an optional display device 4. The display device may be configured to display at least the processed image, and optionally to also display an initial image and/or a pre-processed image. The display device may be connected with the data processing system via a second data connection 5.

If the system comprises a CT imaging system 3 and a display device 4, as shown in Fig. 2, they may optionally be connected with each other via a third data connection 7.

The data connections 5, 6, and 7 may each be wired connection or wireless data connections.

It is to be understood that the system need not comprise all of the above components and may comprise components not described above.

An example for adaptive spike suppression according to the present disclosure, which is applied on pre-processed, i.e., denoised, image data, obtained for example after applying iDose, is described below making reference to the flowchart shown in Fig. 3.

As mentioned above, since the data is denoised, the signal to noise ratio of the spikes is higher and it is easier to identify and remove spikes. The adaptive spike suppression is also referred to as Adaptive Spike Noise Suppression (aSNS) hereinbelow. It is to be understood that the above steps are exemplary steps for illustrative purposes only.

As can be seen from the flow chart in Fig. 3, the exemplary aSNS "NOISE REMOVER" comprises a Linear Model Fitter component that fits a linear (constant) model for the 3D neighborhood of the voxel, a Model Qualifier component that checks if the model meets aSNS requirements, a Adapt Model Parameters component that adapts parameters of the model, if the model does not meet predetermined requirements, and a Model Applier component that applies the model for the voxel.

Examples for each of the components are presented below. Each of the components below is an exemplary component for illustrative purposes only.

Linear Model Fitter

The Linear Model Fitter component may be configured as follows.

For each voxel $V_{i,j,k}$ of the volume, weight factors for N closest neighbors are determined based on Equation 1:

$$w_{i',j',k'} = w^{spatial}{}_{i',j',k'} w^{HU}{}_{i',j',k'} ,$$

wherein $w^{spatial}{}_{i',j',k'}$ represents weights for neighboring voxels according to their spatial distance to $V_{i,j,k}$, and $w^{HU}{}_{i',j',k'}$ represents weights for neighboring voxels according to their value-distance to $V_{i,j,k}$ in the HU (Hounsfield Unit) space.

The weights $w^{spatial}{}_{i',j',k'}$ for neighboring voxels according to their spatial distance can be determined based on Equation 2:

$$w^{spatial}{}_{i',j',k'} = \sqrt{\exp\left(-\frac{\left((i'dx)^2 + (j'dx)^2 + (k'dz)^2\right)}{2\sigma^2_{spatial}}\right)} ,$$

wherein $dx$ is the size of the voxel (e.g., in mm) in the axial plane, $dz$ is the size of the voxel (e.g., in mm) in Z direction, and $\sigma_{spatial}$ is an algorithm parameter that controls the aggressiveness of the weights. $w^{HU}{}_{i',j',k'}$ can be determined based on Equation 3:

$$w^{HU}{}_{i',j',k'} = \sqrt{\exp\left(-\frac{\left(V_{i,j,k} - V_{i+i',j+j',k+k'}\right)^2}{2(\hat{n}_{i,j,k} mult)^2}\right)} ,$$

wherein $\hat{n}_{i,j,k}$ is the local noise level estimate of voxel $V_{i,j,k}$ and $mult$ is an algorithm parameter that control the aggressiveness of the weights. This specific localization weighting directs the fitted models to preserve the local structure of the volume.

Model Qualifier

The Model Qualifier component may analyze the obtained weights $w_{i',j',k'}$ to determine whether the model meets predetermined criteria. If the central voxel weight exceeds a predetermined threshold or exceeds the weights of closest neighbors by more than a predetermined amount or the average weight of central voxels exceeds a threshold, this may indicate that adaption of the model is required. For example, when a central voxel weight significantly exceeds the weights of the closest neighbors, this means that the voxel does not have sufficient support from neighboring voxels. If the model does not meet the criteria, the method proceeds to the step of adapting model parameters, e.g., by means of the Adapt Model Parameters component. Otherwise, the model is applied, e.g., by means of the Model Applier component.

Adapt Model Parameters

The Adapt Model Parameters component may adapt the model by changing, particularly increasing, one or more of the following parameters:

mult, which is an algorithm parameter that controls the aggressiveness of the weights;
$\sigma_{spatial}$ , which is an algorithm parameter that controls spatial weights;
Number of neighbors N.

It is noted that, according to the present disclosure, after adapting the model parameters, the Model Qualifier component may again qualify the adapted model. These steps of adapting and qualifying the model may be repeated until the Model Qualifier component determines that no more adaption is required. Subsequently, the model may be applied, e.g., by the Model Applier component.

Model Applier

The Model Applier component may apply the model by applying weighted averaging as shown in Equation 4:

$$\hat{V}1_{i,j,k} = \frac{\sum_{i'=-n}^{n}\sum_{j'=-n}^{n}\sum_{k'=-n}^{n}V_{i+i',j+j',k+k'}W^2_{i',j',k'}}{\sum_{i'=-n}^{n}\sum_{j'=-n}^{n}\sum_{k'=-n}^{n}W^2_{i',j',k'}},$$

wherein $\hat{V}1_{i,j,k}$ represents the (new) noiseless estimate for voxel $V_{i,j,k}$. As mentioned above, the model may be applied only on the condition that the Model Qualifier component determines that no or no more adapting of the model is required.

A flowchart of an exemplary denoising algorithm that may be used for pre-processing the CT image according to the present disclosure is illustrated in Fig. 4. The noise remover receives image data for pre-processing, selects a suitable linear or quadratic model and removes noise from the image data so as to obtain pre-processed, denoised, image data to be used as input for the spike suppression of the present disclosure.

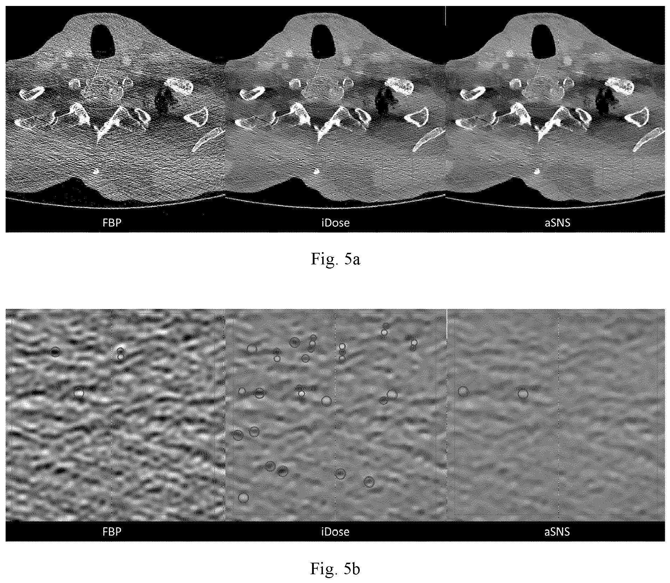

In the following, three examples illustrating the effect of the method of the present disclosure will be described, each illustrated in the Figs. 5a and 5b, 6a and 6b, and 7a and 7b, respectively. The image data in these examples were obtained using a spectral photon counting CT scanner, more specifically, the Philips Spectral Photon Counting CT (SPCCT) scanner. Very low dose data was used for the evaluation. The rectangles highlighted in the Figures are each, as examples only, square areas with the size of $100 \times 100$ pixels.

As an example for identifying a spike and its intensity, a *Spike Threshold* may be defined. To do so, for example, the median $Q_2$, the first quartile $Q_1$ and the third quartile $Q_3$ may be determined and the interquartile range *IQR* = $Q_3$ - $Q_1$ may be calculated for the square area. The spike threshold might then be defined as *Spike Threshold* = $Q_3$ - $Q_2$ + *1.5 \* IQR* for positive spike values, and *Spike Threshold* = $Q_2$ - $Q_1$ + *1.5 \* IQR* for negative spike values.

Any pixels wherein *abs(Pixel Value - Local Median) > Spike Threshold,* may be identified as a spike and the spike intensity may be defined as *abs(Pixel Value - Local Median)*, wherein the *Local Median* may be calculated as a median in a 5x5 square of pixels.

Figs. 5a and 5b illustrate the first example. More specifically, from left to right, first exemplary CT images before pre-processing (labelled FBP, short for filtered backprojection), after pre-processing (labelled iDose), and after adaptive spike suppression (labelled aSNS, short for adaptive spike noise suppression) are shown at different magnifications. The selected square area is highlighted in each of the images and spikes are marked by circles. Fig. 5b shows a magnification of the selected square area. In this example, the initial image is an FBP image, the pre-processed image has been obtained by applying the iDose algorithm, which is an example for an edge-preserving denoising algorithm according to the present disclosure, for pre-processing. The processed image has been obtained by applying the spike suppression of the present disclosure to the pre-processed image. In the FBP image, there are four spikes. The average spike intensity is 820 HU. In the iDose image, the number of spikes increases to 29. The average spike intensity is 446 HU. In the aSNS image, the number of spikes decreases to two. The average spike intensity is 284 HU

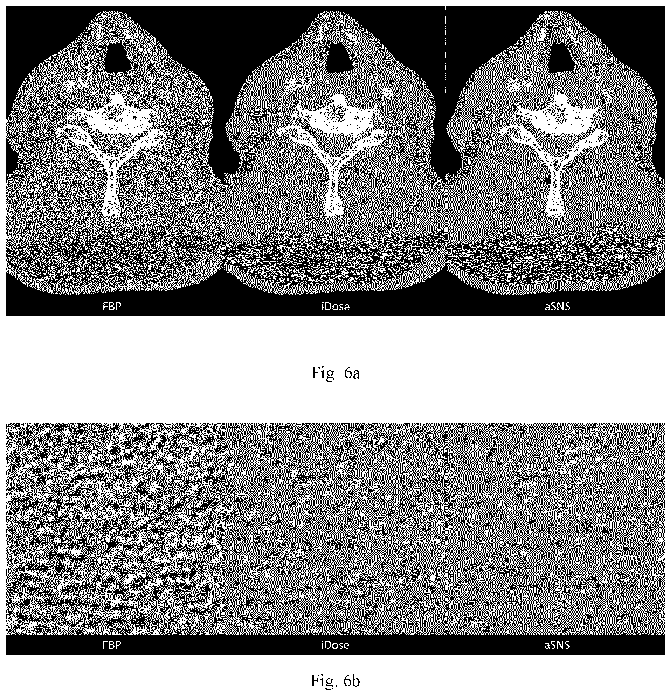

Figs. 6a and 6b illustrate the second example. More specifically, from left to right, second exemplary CT images before pre-processing, after pre-processing, and after adaptive spike suppression at different magnifications are shown. The selected square area is highlighted in each of the images and spikes are marked by circles. Fig. 6b shows a magnification of the selected square area. In this example, the initial image is an FBP image and the pre-processed image has been obtained by applying the iDose algorithm. The processed image has been obtained by applying the spike suppression of the present disclosure to the pre-processed image. In the FBP image, there are 12 spikes. Average Spike Intensity is 436 HU. In the iDose image, the number of spikes increases to 31. Average Spike Intensity is 189 HU. In the aSNS image, the number of spikes decreases to two. Average Spike Intensity is 154 HU

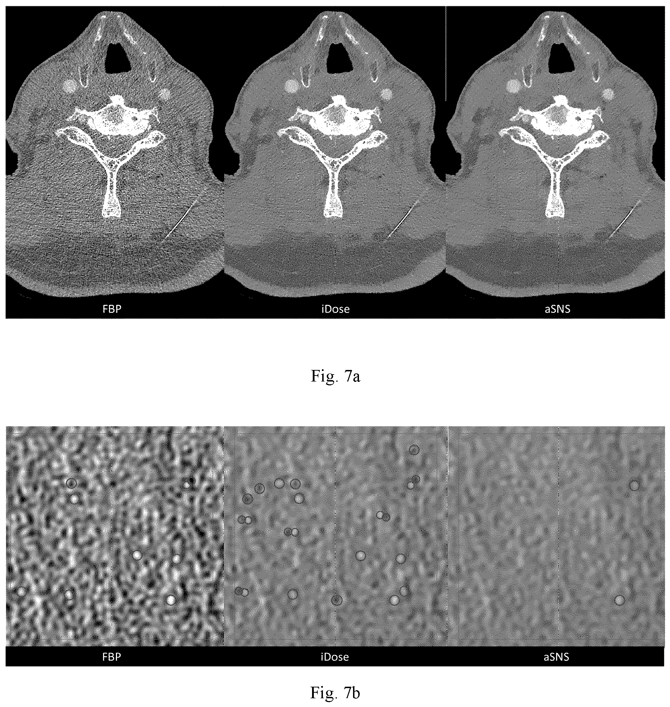

Figs. 7a and 7b illustrate the third example. More specifically, from left to right, third exemplary CT images before pre-processing, after pre-processing, and after adaptive spike suppression at different magnifications are shown. The selected square area is highlighted in each of the images and spikes are marked by circles. Fig. 7b shows a magnification of the selected square area. In this example, the initial image is an FBP image and the pre-processed image has been obtained by applying the iDose algorithm. The processed image has been obtained by applying the spike suppression of the present disclosure to the pre-processed image. In the FBP image, there are nine spikes. Average Spike Intensity is 426 HU. In the iDose image, the number of spikes increases to 22. Average Spike Intensity is 176 HU. In the aSNS image, the number of spikes decreases to two. Average Spike Intensity is 137 HU

The results of the three examples are summarized in Table 1 below, which shows that the spike suppression suppressed the number of spikes by 91-94% and suppressed the average of spike intensity by 19-36%.

Table 1

| Example | Initial Image (FBP) | | Pre-processed Image (iDose) | | processed Image (aSNS) | | Pre-processed vs. Processed Image | |
|---|---|---|---|---|---|---|---|---|
| | Number of Spikes | Average Intensity | number of Spikes | Average Intensity | Number of Spikes | Average Intensity | Number of Spikes Improvement | Intensity Improvement |
| 1 | 4 | 820 HU | 29 | 446 HU | 2 | 284 HU | 93% | 36% |
| 2 | 12 | 436 HU | 31 | 189 HU | 2 | 154 HU | 94% | 19% |
| 3 | 9 | 426 HU | 22 | 176 HU | 2 | 137 HU | 91% | 22% |

Thus, it can be seen, both, from the images and the calculation, that the number of spikes and their intensity are noticeably improved.

While the invention has been illustrated and described in detail in the drawings and foregoing description, such illustration and description are to be considered exemplary and not restrictive. The invention is not limited to the disclosed embodiments. In view of the foregoing description and drawings it will be evident to a person skilled in the art that various modifications may be made within the scope of the invention, as defined by the claims.

LIST OF REFERENCE SIGNS:

S1 performing one or more pre-processing steps;
S2 performing an adaptive spike suppression algorithm;
System 1;
Data processing system 2;
CT imaging system 3;
Display device 4;
Data connections 5, 6, 7

**Claims**

1. A computer-implemented method for image-processing of CT images, the method comprising:

    performing one or more pre-processing steps (S1) on a CT image so as to obtain a pre-processed CT image, wherein the one or more pre-processing steps comprise applying an edge-preserving denoising algorithm; and
    performing an adaptive spike suppression algorithm (S2) on the pre-processed CT image to obtain a processed CT image.

2. The method of claim 1, wherein performing the adaptive spike suppression algorithm comprises fitting a model, in particular a linear model, for a three-dimensional neighborhood of a voxel of the pre-processed image.

3. The method of claim 2, wherein performing the adaptive spike suppression algorithm comprises:

    qualifying the model, wherein qualifying the model comprises checking whether the model meets one or more predetermined criteria; and
    in response to determining that the model does not meet the one or more predetermined criteria, adapting one or more model parameters of the model to obtain a modified model.

4. The method of claim 3, wherein performing the spike suppression algorithm comprises repeating the steps of qualifying the modified model and adapting one or model parameters until the modified model meets the predetermined criteria.

5. The method of claim 3 or claim 4, wherein performing the spike suppression algorithm further comprises, in response to determining that the model or the modified model meets the predetermined criteria, applying the model or the modified model for the voxel.

6. The method of any one of claims 2 to 4,

wherein fitting the model comprises, for each voxel, determining, for each of a plurality of closest-neighbor voxels, a weight factor, in particular, the weight factor incorporating at least one of a weight based on spatial distance between the voxel and the closest-neighbor voxel and a weight based on value-distance between the voxel and the closest-neighbor voxel; and/or

wherein performing the adaptive spike suppression algorithm comprise qualifying the model, wherein qualifying the model comprises checking whether the model meets one or more predetermined criteria, and wherein checking whether the model meets one or more predetermined criteria comprises checking whether a/the weight factor of one or more voxels is within a predetermined range, in particular, remains below a predetermined threshold; and/or

wherein applying the model comprises, for each voxel, performing weighted averaging using a/the weight factor or weight factors determined for each of a plurality of closest-neighbor voxels.

7. The method of any one of claims 3 to 6, wherein fitting the model for a three-dimensional neighborhood of a voxel of the pre-processed image is performed using a filter and wherein adapting one or more model parameters comprises adapting filter parameters.

8. The method of any one of claims 3 to 7, wherein adapting one or more model parameters comprises at least one of:

adapting a parameter that determines aggressiveness of the weights, in particular adapting the parameter that determines aggressiveness of the weights so as to increase the aggressiveness of the weights;

adapting a parameter that controls spatial weights, in particular adapting the parameter that controls spatial weights so as to increase the spatial weights;

adapt a parameter that determines the number of closest-neighbor voxels, in particular adapt the parameter that determines the number of closest-neighbor voxels so as to increase the number of closest-neighbor voxels.

9. The method of claim 8, wherein adapting one or more model parameters comprises iteratively increasing the aggressiveness of the weights and/or iteratively increasing the spatial weights and/or iteratively increasing the number of closest-neighbor voxels.

10. The method of any of claims 2 to 9,

wherein a/the weight based on spatial distance between the voxel $V_{i,j,k}$ and the closest-neighbor voxel is determined as follows:

$$w^{spatial}_{i',j',k'} = \sqrt{\exp\left(-\frac{\left((i'dx)^2 + (j'dx)^2 + (k'dz)^2\right)}{2\sigma^2_{spatial}}\right)},$$

Wherein $dx$ is the size of the voxel in the axial plane, $dz$ is the size of the voxel in Z direction, and $\sigma_{spatial}$ is an algorithm parameter that controls the aggressiveness of the weights; and/or

wherein a/the weight based on value-distance between the voxel $V_{i,j,k}$ and the closest-neighbor voxel is determined as follows:

$$w^{HU}{}_{i',j',k'} = \sqrt{\exp\left(-\frac{\left(V_{i,j,k} - V_{i+i',j+j',k+k'}\right)^2}{2(\hat{n}_{i,j,k}mult)^2}\right)} \,,$$

Wherein $\hat{n}_{i,j,k}$ is the local noise level estimate of voxel $V_{i,j,k}$ and *mult* is an algorithm parameter that controls the aggressiveness of the weights; and/or

wherein applying the model comprises applying weighted averaging as follows:

$$\hat{V}^1{}_{i,j,k} = \frac{\sum_{i'=-n}^{n}\sum_{j'=-n}^{n}\sum_{k'=-n}^{n} V_{i+i',j+j',k+k'} \cdot w^2{}_{i',j',k'}}{\sum_{i'=-n}^{n}\sum_{j'=-n}^{n}\sum_{k'=-n}^{n} w^2{}_{i',j',k'}} \,,$$

wherein $\hat{V}^1{}_{i,j,k}$ represents the noiseless estimate for voxel $V_{i,j,k}$ and $w_{i',j',k'}$ is a/the weight factor of the closest-neighbor voxels of voxel $V_{i,j,k}$, in particular, wherein

$$w_{i',j',k'} = w^{spatial}{}_{i',j',k'} \cdot w^{HU}{}_{i',j',k'} \,.$$

11. A method comprising the method for image-processing according to any of the preceding claims and further comprising:

   capturing the CT image by means of a photon counting CT imaging system, in particular by means of a low-dose CT scan; and/or

   storing the processed CT image on a storage device and/or outputting the processed CT image, in particular on a display device; and/or

   using the processed CT image for image-guided navigation and/or for computerized image recognition methods.

12. A data processing system (2) configured to

   perform one or more pre-processing steps on a CT image so as to obtain a pre-processed CT image, wherein the one or more pre-processing steps comprise applying an edge-preserving denoising algorithm, and

   perform an adaptive spike suppression algorithm on the pre-processed CT image to obtain a processed CT image,

   in particular, configured to carry out the method of any one of claims 1 to 11.

13. A system (1) comprising the data processing system (2) of claim 12 and further comprising:

   a CT imaging system (3) configured to capture the CT image, in particular, wherein the CT imaging system is a photon counting CT imaging system; and/or

   a display device (4) configured to output the processed CT image.

14. A computer program product comprising instructions which, when the program is executed by a computer, cause the computer to carry out the steps of:

   performing one or more pre-processing steps on a CT image so as to obtain a pre-processed CT image, wherein the one or more pre-processing steps comprise applying an edge-preserving denoising algorithm; and

   performing an adaptive spike suppression algorithm on the pre-processed CT image to obtain a processed CT image,

   in particular, cause the computer to carry out the method of any one of claims 1 to 11.

15. A computer readable medium comprising instructions which, when executed by a computer, cause the computer to carry out the steps of:

performing one or more pre-processing steps on a CT image so as to obtain a pre-processed CT image, wherein the one or more pre-processing steps comprise applying an edge-preserving denoising algorithm, and performing an adaptive spike suppression algorithm on the pre-processed CT image to obtain a processed CT image,

in particular, cause the computer to carry out the method of any one of claims 1 to 11.

**S1**

performing one or more pre-processing steps (S1) on a CT image  so as to obtain a pre-processed CT image, wherein the one or more pre-processing steps comprise applying an edge-preserving denoising algorithm

**S2**

performing an adaptive spike suppression algorithm (S2) on the pre-processed CT image to obtain a processed CT image

Fig. 1

Fig. 2

aSNS NOISE REMOVER

DENOISED
IMAGE DATA →

| LINEAR MODEL FITTER | MODEL QUALIFIER | MODEL APPLIER |

→ aSNS DENOISED
IMAGE DATA

DENOISED IMAGE NOISE
STD DISTRIBUTION →

ADAPT LINEAR
MODEL PARAMETERS

Fig. 3

NOISE REMOVER

IMAGE
DATA →

| MODEL FITTER | MODEL SELECTOR | MODEL APPLIER |

→ DENOISED
IMAGE DATA

NOISE STD
DISTRIBUTION →

MODEL BANK
MODELS

ALGORITHM BANK
ALGORITHMS

Fig. 4

Fig. 5a

Fig. 5b

Fig. 6a

Fig. 6b

Fig. 7a

Fig. 7b

## EUROPEAN SEARCH REPORT

Application Number

EP 21 21 6190

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2017/098317 A1 (QI WENYUAN [US] ET AL) 6 April 2017 (2017-04-06) | 1-9, 11-15 | INV. G06T5/00 |
| A | * paragraph [0039] – paragraph [0079] * * figures 1, 4a * | 10 | G06T11/00 |
| A | WEI ZHAO ET AL: "Using edge-preserving algorithm with non-local mean for significantly improved image-domain material decomposition in dual-energy CT", PHYSICS IN MEDICINE AND BIOLOGY, INSTITUTE OF PHYSICS PUBLISHING, BRISTOL GB, vol. 61, no. 3, 21 January 2016 (2016-01-21), pages 1332-1351, XP020297933, ISSN: 0031-9155, DOI: 10.1088/0031-9155/61/3/1332 [retrieved on 2016-01-21] * the whole document * | 1-15 | |
| A | HARMS JOSEPH ET AL: "Signal preserving non-local noise suppression for photon-counting CT", 2017 IEEE NUCLEAR SCIENCE SYMPOSIUM AND MEDICAL IMAGING CONFERENCE (NSS/MIC), IEEE, 21 October 2017 (2017-10-21), pages 1-6, XP033446128, DOI: 10.1109/NSSMIC.2017.8532861 [retrieved on 2018-11-12] * the whole document * | 1-15 | TECHNICAL FIELDS SEARCHED (IPC)  G06T |

-/--

The present search report has been drawn up for all claims

| Place of search | Date of completion of the search | Examiner |
|---|---|---|
| Munich | 2 June 2022 | Werling, Alexander |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

page 1 of 2

**EUROPEAN SEARCH REPORT**

Europäisches Patentamt
European Patent Office
Office européen des brevets

Application Number

EP 21 21 6190

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | HAICHAO ZHANG ET AL: "Image and Video Restorations via Nonlocal Kernel Regression", IEEE TRANSACTIONS ON CYBERNETICS, IEEE, PISCATAWAY, NJ, USA, vol. 43, no. 3, June 2013 (2013-06), pages 1035-1046, XP011509189, ISSN: 2168-2267, DOI: 10.1109/TSMCB.2012.2222375 * eq. (14); page 1038, left-hand column * | 1-15 | |

TECHNICAL FIELDS SEARCHED (IPC)

The present search report has been drawn up for all claims

| Place of search | Date of completion of the search | Examiner |
|---|---|---|
| Munich | 2 June 2022 | Werling, Alexander |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 4 202 824 A1**

## ANNEX TO THE EUROPEAN SEARCH REPORT
## ON EUROPEAN PATENT APPLICATION NO.

**EP 21 21 6190**

This annex lists the patent family members relating to the patent documents cited in the above-mentioned European search report.
The members are as contained in the European Patent Office EDP file on
The European Patent Office is in no way liable for these particulars which are merely given for the purpose of information.

**02-06-2022**

| Patent document cited in search report | | Publication date | Patent family member(s) | | Publication date |
|---|---|---|---|---|---|
| US 2017098317 | A1 | 06-04-2017 | JP | 6765904 B2 | 07-10-2020 |
| | | | JP | 2017067765 A | 06-04-2017 |
| | | | US | 2017098317 A1 | 06-04-2017 |

EPO FORM P0459

For more details about this annex : see Official Journal of the European Patent Office, No. 12/82